# EUROPEAN PATENT APPLICATION

(11) **EP 4 510 348 A1**
(43) Date of publication of application: **19.02.2025**
(21) Application number: 22958449.5
(22) Date of filing: 15.09.2022
(51) Int. Cl.: H01M 50/342, H01M 50/147

(54) **BATTERY CELL, BATTERY, AND ELECTRICAL APPARATUS**

(71) Applicant: Contemporary Amperex Technology Co., Limited, Ningde, Fujian 352100 (CN)
(72) Inventor: KE, Haibo, Ningde, Fujian 352100 (CN); LI, Quankun, Ningde, Fujian 352100 (CN); HUANG, Shoujun, Ningde, Fujian 352100 (CN); WANG, Peng, Ningde, Fujian 352100 (CN); JIN, Haizu, Ningde, Fujian 352100 (CN); XING, Chengyou, Ningde, Fujian 352100 (CN)
(74) Representative: Frick, Robert
(86) International application number: PCT/CN2022/119136
(87) International publication number: WO 2024/055257

(57) **Abstract**

The present disclosure provides a battery cell, battery, and electric device, relating to the field of battery technology. The battery cell comprises a casing and a pressure relief mechanism. The casing is provided therein with an accommodating space configured to accommodate an electrode assembly, wherein the casing is provided with a mounting hole in communication with the accommodating space, and the mounting hole is provided with a first hole wall surface extending along a circumferential direction of the mounting hole. The pressure relief mechanism is arranged in the mounting hole, wherein an outer peripheral surface of the pressure relief mechanism is welded to the first hole wall surface. The casing is provided with a first annular groove, and the first annular groove surrounds an outer side of the first hole wall surface; and/or the pressure relief mechanism is provided with a second annular groove, and the first hole wall surface surrounds an outer side of the second annular groove. When the pressure relief mechanism is welded to the first hole wall surface, by the first annular groove and/or the second annular groove, it is possible to release the welding stresses of the pressure relief mechanism and the casing so as to reduce the impact of the welding stress on the pressure relief mechanism. It can also reduce the occurrence of cracks in the welding region between the pressure relief mechanism and the casing due to the pulling caused by the welding stress.

## Description

### Technical Field

The present disclosure relates to the technical field of batteries, in particular to a battery cell, a battery, and an electric device.

### Background Art

In recent years, new energy vehicles have experienced a leapfrog development. In the field of electric vehicles, power batteries serve as the energy source for electric vehicles and play an irreplaceable important role. With the strong promotion of new energy vehicles, the demand for power battery products is also increasing. Among them, the battery, as the core component of new energy vehicles, has high requirements in terms of both safety and service life. The battery cell of the battery is assembled from the positive electrode sheet, the negative electrode sheet, and the separator through methods such as winding or stacking to form an electrode assembly (bare core). It is then placed into a casing and finally obtained after injecting the electrolyte. Moreover, a pressure relief mechanism is provided on the casing to relieve the internal pressure of the battery cell when the battery cell experiences thermal runaway. However, the battery cell in the prior art has the problem of poor stability in the process of use, which leads to lower safety in the use of the battery cell and a shorter service life.

### Summary

The embodiments of the present disclosure provide a battery cell, a battery, and an electric device that can effectively enhance the safety and service life in the use of the battery cell.

In the first aspect, the embodiments of the present disclosure provide a battery cell, comprising a casing and a pressure relief mechanism. The casing is provided therein with an accommodating space configured to accommodate an electrode assembly, wherein the casing is provided with a mounting hole in communication with the accommodating space, and the mounting hole is provided with a first hole wall surface extending along a circumferential direction of the mounting hole. The pressure relief mechanism is arranged in the mounting hole, wherein an outer peripheral surface of the pressure relief mechanism is welded to the first hole wall surface. The casing is provided with a first annular groove, and the first annular groove surrounds an outer side of the first hole wall surface; and/or the pressure relief mechanism is provided with a second annular groove, and the first hole wall surface surrounds an outer side of the second annular groove.

In the above technical solution, the mounting hole configured for mounting the pressure relief mechanism is provided on the casing, and the outer peripheral surface of the pressure relief mechanism is welded to the first hole wall surface of the mounting hole so that the pressure relief mechanism can release the internal pressure of the battery cell. A first annular groove extending along the circumferential direction of the mounting hole is provided on the casing. The first annular groove is provided around the first hole wall surface; and/or a second annular groove extending along the circumferential direction of the mounting hole is provided on the pressure relief mechanism. Additionally, the first hole wall surface is provided around the second annular groove. When the pressure relief mechanism is welded to the first hole wall surface, by the first annular groove and/or the second annular groove, a deformation space can be provided for the plastic deformation generated during welding in the welding region between the two, thereby releasing and absorbing the welding stress between the relief mechanism and the casing. On one hand, it can reduce the impact of welding stress on the pressure relief mechanism, thus improving the service life of the pressure relief mechanism and consequently enhancing the service life of the battery cell. On the other hand, it can reduce the occurrence of cracks in the welding region between the pressure relief mechanism and the casing due to the pulling caused by the welding stress, thereby lowering the risk of liquid leakage from the battery cell due to the failure of the welding between the pressure relief mechanism and the casing. In turn, this will help to improve the safety of the use of the battery cells.

In some embodiments, a groove width of the first annular groove is W₁, satisfying 0.2mm≤W₁≤3mm.

In the above technical solution, by setting the groove width of the first annular groove at 0.2mm to 3mm, on the one hand, it is possible to alleviate the phenomenon where the effect of the welding stress released by the first annular groove between the pressure relief mechanism and the casing is poor due to the groove width of the first annular groove being too small. On the other hand, it can alleviate the phenomenon that the structural strength of the casing is insufficient, where the first annular groove occupies excessive space in the casing due to the groove width of the first annular groove being too large. This helps to ensure the structural strength of the shell itself.

In some embodiments, the pressure relief mechanism comprises a pressure relief portion and a connecting part. The pressure relief portion is configured to release an internal pressure of the battery cell; and the connecting part is arranged around the pressure relief portion along a circumferential direction of the mounting hole, wherein an outer peripheral surface of the connecting part is welded to the first hole wall surface. Along a thickness direction of the pressure relief mechanism, a thickness of the connecting part is greater than a thickness of the pressure relief portion.

In the above technical solution, the pressure relief mechanism consists of a pressure relief portion configured for releasing the internal pressure of the battery cell and a connecting part arranged around the pressure relief portion. The connecting part is configured for welding with the casing. By setting the thickness of the connecting part to be greater than the thickness of the pressure relief portion, the welding strength and the welding quality between the connecting part and the casing can be ensured. Additionally, it can reduce the impact on the pressure relief portion when the connecting part is welded to the casing. This is conducive to ensuring the stability and reliability in the use of the pressure relief mechanism.

In some embodiments, along the thickness direction of the pressure relief mechanism, the thickness of the connecting part is H₁ and a groove depth of the first annular groove is H₂, satisfying 1.5≤H₁/H₂≤5.

In the above technical solution, the ratio of the thickness of the connecting part to the groove depth of the first annular groove is set between 1.5 and 5. In other words, the thickness of the connecting part is between 1.5 times and 5 times the groove depth of the first annular groove. On one hand, it can alleviate the phenomenon where the effect of the welding stress released by the first annular groove between the pressure relief mechanism and the casing is poor due to the groove depth of the first annular groove being too small. On the other hand, it can alleviate the phenomenon where the structural strength of the casing is insufficient due to the groove depth of the first annular groove being too large, thus reducing the risk of cracking in the shell.

In some embodiments, along a radial direction of the mounting hole, a distance between the first annular groove and the first hole wall surface is D₁, satisfying 0.5mm≤D₁≤3mm.

In the above technical solution, a distance between the first annular groove and the first hole wall surface in the radial direction of the mounting hole is set at 0.5 mm to 3 mm. In other words, the width of the gap between the first hole wall surface and the first annular groove is from 0.5 mm to 3 mm. On one hand, it can alleviate the phenomenon where the welding quality is poor due to the region of the casing configured for welding with the pressure relief mechanism being too small, which is caused by the gap width between the first hole wall surface and the first annular groove being too small. On the other hand, it can alleviate the phenomenon where the effect of relieving the welding stress between the pressure relief mechanism and the casing by the first annular groove is poor due to the excessive width of the gap between the first hole wall surface and the first annular groove, which prevents the first annular groove from effectively providing deformation space for the plastic deformation generated by the welding of the casing and the pressure relief mechanism.

In some embodiments, the outer peripheral surface of the pressure relief mechanism is welded to the first hole wall surface to form a weld mark portion extending along the circumferential direction of the mounting hole, and the outer edge of the weld mark portion is provided at intervals from an inner edge of the first annular groove.

In the above technical solution, the outer edge of the weld mark portion, formed by the welding of the pressure relief mechanism and the casing, is arranged at intervals with the inner edge of the first annular groove. In other words, a gap is provided between the weld mark portion and the first annular groove. Thus, it can alleviate the phenomenon of mutual interference between the weld mark portion, formed by the welding of the pressure relief mechanism and the casing, and the first annular groove, thereby reducing the risk of blowouts when the pressure relief mechanism and the casing are welded with each other. This is conducive to improving the welding quality between the casing and the pressure relief mechanism.

In some embodiments, the first annular groove is provided on one side of the casing away from the accommodating space.

In the above technical solution, the first annular groove is arranged on the side of the casing away from the accommodating space; in other words, the first annular groove is arranged on the outer side of the casing. This type of structure for the casing is conducive to manufacturing and processing, which helps to reduce the difficulty of machining the first annular groove.

In some embodiments, the mounting hole is a stepped hole; along the thickness direction of the pressure relief mechanism, the mounting hole comprises a first hole segment, a second hole segment, and a third hole segment provided in sequence, wherein hole diameters of the first hole segment, the second hole segment, and the third hole segment gradually decrease; and the first hole segment is located on one side of the second hole segment away from the accommodating space, and at least a portion of the pressure relief mechanism is arranged within the second hole segment and covers the third hole segment; a hole wall of the first hole segment is connected to the hole wall of the second hole segment via a connecting surface; the hole wall of the second hole segment comprises the first hole wall surface; and the first annular groove is arranged on the connecting surface.

In the above technical solution, the mounting hole is of a structure of the stepped hole, and the mounting hole comprises a first hole segment, a second hole segment, and a third hole segment arranged in sequence. This means that the mounting hole comprises at least three segments to facilitate the assembly of the pressure relief mechanism. By arranging the pressure relief mechanism in the second hole segment, the outer peripheral surface of the pressure relief mechanism is welded to the hole wall of the second hole segment. The first annular groove is arranged on the connecting surface between the hole wall of the first hole segment and the hole wall of the second hole segment so that the first annular groove is adjacent to the hole wall of the second hole segment, that is, the first annular groove is adjacent to the first hole wall surface configured for mutual welding with the pressure relief mechanism. This is conducive to enhancing the effect of the first annular groove in releasing the welding stress between the pressure relief mechanism and the casing.

In some embodiments, the mounting hole is the stepped hole; along the thickness direction of the pressure relief mechanism, the mounting hole comprises a first hole segment and a second hole segment provided in sequence, wherein a hole diameter of the first hole segment is larger than that of the second hole segment, and the first hole segment penetrates through an outer surface of the casing; and at least a portion of the pressure relief mechanism is arranged within the first hole segment and covers the second hole segment; the hole wall of the first hole segment comprises the first hole wall surface; and the first annular groove is arranged on the outer surface of the casing.

In the above technical solution, the mounting hole is of a structure of the stepped hole. The mounting hole comprises a first hole segment and a second hole segment arranged in sequence, and the first hole segment penetrates through the outer surface of the casing. This means that the mounting hole comprises at least two hole segments, and the first hole segment is the hole segment furthest away from the accommodating space of the casing. By arranging the pressure relief mechanism in the first hole segment, the outer peripheral surface of the pressure relief mechanism is welded to the hole wall of the first hole segment, and the first annular groove is arranged on the outer surface of the casing. On the one hand, it is convenient to process the first annular groove, which is conducive to reducing the difficulty of processing the first annular groove. On the other hand, the first annular groove is adjacent to the hole wall of the first hole segment, that is, the first annular groove is adjacent to the first hole wall surface configured for mutual welding with the pressure relief mechanism. This is conducive to enhancing the effect of the first annular groove in releasing the welding stress between the pressure relief mechanism and the casing.

In some embodiments, a groove width of the second annular groove is W₂, satisfying 0.2mm≤W₂≤3mm.

In the above technical solution, by setting the groove width of the second annular groove at 0.2mm to 3mm, on the one hand, it is possible to alleviate the phenomenon where the effect of the welding stress released by the second annular groove between the pressure relief mechanism and the casing is poor due to the groove width of the second annular groove being too small. On the other hand, it can alleviate the phenomenon that the structural strength of the pressure relief mechanism is insufficient, leading to opening the valve prematurely, which is caused by the case where the second annular groove occupies excessive space in the pressure relief mechanism due to the groove width of the second annular groove being too large. This helps to ensure the stability of the pressure relief mechanism in use.

In some embodiments, along the radial direction of the mounting hole, a distance between the second annular groove and the first hole wall surface is D₂, satisfying 0.5mm≤D₂≤3mm.

In the above technical solution, a distance between the second annular groove and the first hole wall surface in the radial direction of the mounting hole is set at 0.5 mm to 3 mm. In other words, the width of the gap between the first hole wall surface and the second annular groove is from 0.5 mm to 3 mm. On one hand, it can alleviate the phenomenon where the welding quality is poor due to the region of the casing configured for welding with the pressure relief mechanism being too small, which is caused by the gap width between the first hole wall surface and the second annular groove being too small. On the other hand, it can alleviate the phenomenon where the effect of relieving the welding stress between the pressure relief mechanism and the casing by the second annular groove is poor due to the excessive width of the gap between the first hole wall surface and the second annular groove, which prevents the second annular groove from effectively providing deformation space for the plastic deformation generated by the welding of the casing and the pressure relief mechanism.

In some embodiments, the outer peripheral surface of the pressure relief mechanism is welded to the first hole wall surface to form a weld mark portion extending along the circumferential direction of the mounting hole, and the inner edge of the weld mark portion is provided at intervals from an outer edge of the second annular groove.

In the above technical solution, the inner edge of the weld mark portion formed by the welding of the pressure relief mechanism and the casing is arranged at intervals with the outer edge of the second annular groove. In other words, a gap is provided between the weld mark portion and the second annular groove. Thus, it can alleviate the phenomenon of mutual interference between the weld mark portion, formed by the welding of the pressure relief mechanism and the casing, and the second annular groove, thereby reducing the risk of blowouts when the pressure relief mechanism and the casing are welded with each other. This is conducive to improving the welding quality between the casing and the pressure relief mechanism.

In some embodiments, the pressure relief mechanism comprises a pressure relief portion and a connecting part. The pressure relief portion is configured to release an internal pressure of the battery cell; and the connecting part is arranged around the pressure relief portion along a circumferential direction of the mounting hole, wherein an outer peripheral surface of the connecting part is welded to the first hole wall surface. Along a thickness direction of the pressure relief mechanism, a thickness of the connecting part is greater than a thickness of the pressure relief portion. The second annular groove is arranged on the connecting part, and the second annular groove surrounds the outer side of the pressure relief portion.

In the above technical solution, the pressure relief mechanism is provided with a pressure relief portion and a connecting part, wherein the connecting part is configured for welding with the casing, and the thickness of the connecting part is greater than the thickness of the pressure relief portion. By arranging the second annular groove on the connecting part, it is possible to reduce the impact of the second annular groove on the overall structural strength of the pressure relief mechanism and facilitate the machining of the second annular groove, thus helping to reduce the manufacturing difficulty of the second annular groove.

In some embodiments, along the thickness direction of the pressure relief mechanism, the thickness of the connecting part is H₁ and a groove depth of the second annular groove is H₃, satisfying 1.5≤H₁/H₃≤5.

In the above technical solution, the ratio of the thickness of the connecting part to the groove depth of the second annular groove is set between 1.5 and 5. In other words, the thickness of the connecting part is between 1.5 times and 5 times the groove depth of the second annular groove. On one hand, it can alleviate the phenomenon where the effect of the welding stress released by the second annular groove between the pressure relief mechanism and the casing is poor due to the groove depth of the second annular groove being too small. On the other hand, it can alleviate the phenomenon where the structural strength of the connecting part of the pressure relief mechanism is insufficient due to the groove depth of the second annular groove being too large, thus ensuring the stability and reliability of the connection between the pressure relief mechanism and the casing.

In some embodiments, the pressure relief portion is provided with a scored groove, and the pressure relief portion is configured to be able to crack along the scored groove to release the internal pressure of the battery cell; and along the thickness direction of the pressure relief mechanism, a distance between a bottom surface of the second annular groove and a surface of the connecting part away from the second annular groove is L₁, and a distance between a bottom surface of the scored groove and a surface of the pressure relief portion away from the scored groove is L₂, satisfying L₁/L₂≤1.2.

In the above technical solution, in the thickness direction of the pressure relief mechanism, the ratio of the distance between the bottom surface of the second annular groove and the surface of the connecting part away from the second annular groove to the distance between the bottom surface of the scored groove and the surface of the pressure relief portion away from the scored groove is set to be greater than or equal to 1.2. In other words, the thickness of the connecting part at the position where the second annular groove is arranged is greater than or equal to 1.2 times the thickness of the pressure relief portion at the position where the scored groove is arranged, which effectively ensures that the pressure relief mechanism primarily opens the valve at the position where the notch groove is arranged to release the internal pressure of the battery cell. Further, this helps to ensure the stability and reliability of the pressure relief mechanism in use, thereby reducing the risk of the pressure relief mechanism being opened at the position where the second annular groove is arranged.

In some embodiments, the second annular groove is provided on one side of the pressure relief mechanism away from the accommodating space.

In the above technical solution, the second annular groove is arranged on the side of the pressure relief mechanism away from the accommodating space; in other words, the second annular groove is arranged on the outer side of the pressure relief mechanism. This type of structure for the pressure relief mechanism is conducive to manufacturing and processing, which helps to reduce the difficulty of machining the second annular groove.

In the second aspect, the embodiments of the present disclosure provide a battery cell, comprising the multiple battery cells as described above.

In the third aspect, the embodiments of the present disclosure further provide an electric device comprising the battery as described above.

### Brief Description of Drawings

To more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinary skilled in the art can also obtain other related drawings based on these drawings without inventive effort.
FIG. 1 is a schematic diagram of a structure of a vehicle provided in some embodiments of the present disclosure;
FIG. 2 is an exploded view of the structure of a battery provided in some embodiments of the present disclosure;
FIG. 3 is an exploded view of the structure of the battery cell provided in some embodiments of the present disclosure;
FIG. 4 is an upward view of the battery cell provided in some embodiments of the present disclosure;
FIG. 5 is a sectional view of a casing of the battery cell provided in some embodiments of the present disclosure;
FIG. 6 is a partially enlarged view at part A of the casing shown in FIG. 5;
FIG. 7 is a partial sectional view of the casing of the battery cell provided in some other embodiments of the present disclosure;
FIG. 8 is an upward view of the battery cell provided in some further embodiments of the present disclosure;
FIG. 9 is a sectional view of the casing of the battery cell provided in some further embodiments of the present disclosure;
FIG. 10 is a partially enlarged view of part B of the casing shown in FIG. 9; and
FIG. 11 is a partial sectional view of a pressure relief mechanism of the battery cell provided in some further embodiments of the present disclosure.

Reference numerals: 1000- vehicle; 100- battery; 10- box; 11- first box body; 12-second box body; 20- battery cell; 21- casing; 211- accommodating space; 212- mounting hole; 2121 - first hole wall surface; 2122- first hole segment; 2123- second hole segment; 2124- third hole segment; 2125- connecting surface; 213- first annular groove; 214- shell; 2141- opening; 2142- bottom wall; 2143- side wall; 215- end cap; 22- pressure relief mechanism; 221- pressure relief portion; 2211-scored groove; 222- connecting part; 223-second annular groove; 23-weld mark portion; 24- electrode assembly; 25- positive electrode terminal; 26- negative electrode terminal; 200- controller; 300- motor; X- thickness direction of pressure relief mechanism.

### Detailed Description of Embodiments

In order to make the objective, technical solution, and advantages of the embodiments of the present disclosure more clear, the following will provide a clear and complete description of the technical solution in the embodiments of the present disclosure, in conjunction with the drawings in the embodiments of the present disclosure. Obviously, the described embodiments are only a part of the embodiments of the present disclosure, rather than all embodiments. Based on the embodiments in the present disclosure, all other embodiments obtained by those of ordinary skill in the art without making inventive efforts are within the scope of protection of the present disclosure.

Unless otherwise defined, all technical and scientific terms used herein have the same meaning as understood by those skilled in the art of the relevant technical field. The terms used in the summary of the present disclosure are used for the purpose of describing specific embodiments and are not intended to limit the present disclosure. The terms "comprise" and "provide" and their variations, as well as any other variations, are intended to cover non-exclusive inclusion in the summary and the claims of the present disclosure, as well as in the drawings. The terms "first", "second", etc., used in the summary and claims of the present disclosure, or in the above drawings, are used to distinguish between different objects and are not intended to describe a specific sequence or hierarchy.

The term "embodiment" used in the present disclosure means that specific features, structures, or characteristics described in conjunction with the embodiment can be included in at least one embodiment of the present disclosure. The use of this phrase in various parts of the summary does not necessarily refer to the same embodiment, nor does it imply that these embodiments are mutually exclusive or independent of each other.

In the description of the present disclosure, it should be noted that, unless otherwise clearly stipulated and limited, the terms "provide", "interconnect", "connect" and "attach" should be understood in a broad sense, for example, it can be a fixed connection, a detachable connection, or an integral connection, and it can be a direct connection, an indirect connection through an intermediary, or an internal communication between two components. Those of ordinary skill in the art can understand the meanings of the above terms in the present disclosure according to specific situations.

In the present disclosure, the term "and/or" is used as a way to describe the relationship between associated objects, indicating that there can be three possible relationships. For example, "A and/or B" can represent: the presence of A alone, the presence of both A and B, or the presence of B alone. Additionally, the character "/" in the present disclosure generally represents an "or" relationship between the preceding and following associated objects.

In the embodiments of the present disclosure, identical reference numerals indicate the same components. For the sake of conciseness, detailed explanations of the same components are omitted in different embodiments. It should be understood that the dimensions such as thickness, length, and width of various components in the embodiments of the present disclosure as shown in the drawings, as well as the overall dimensions such as thickness, length, and width of the integrated device, are provided as illustrative examples and should not be construed to limit the scope of the present disclosure.

In the present disclosure, the term "multiple" refers to two or more (including two).

In the present disclosure, the battery cell can comprise various types of batteries such as lithium-ion secondary batteries, lithium-ion primary batteries, lithium-sulfur batteries, sodium-ion batteries, magnesium-ion batteries, etc. The embodiments of the present disclosure are not limited to any specific type of battery. The battery cell can have various shapes such as cylindrical, flat, rectangular, or other shapes. The embodiments of the present disclosure do not impose limitations on this aspect either. The battery cells are generally categorized into three packaging types: cylindrical battery cells, prismatic battery cells, and pouch battery cells. The embodiments of the present disclosure do not impose limitations in this regard either.

The batteries mentioned in the embodiments of the present disclosure refer to a single physical module that comprises one or multiple battery cells to provide higher voltage and capacity. For example, the batteries mentioned in the present disclosure can comprise battery modules or battery packs, and so on. A battery generally comprises a box for encapsulating one or more battery cells or multiple battery modules. The box helps to prevent liquids or other foreign substances from affecting the charging or discharging of the battery cells.

The battery cell comprises a casing, an electrode assembly, and an electrolyte, and the casing is configured to accommodate the electrode assembly and the electrolyte. The electrode assembly is composed of a positive electrode sheet, a negative electrode sheet, and a separator. The operation of the battery cell relies on the movement of metal ions between the positive electrode sheet and the negative electrode sheet. The positive electrode sheet comprises a positive electrode current collector and a positive electrode active material layer. The positive electrode active material layer is coated on a surface of the positive electrode current collector. The portion of the positive electrode current collector not coated with the positive electrode active material layer serves as the positive electrode tab to realize the input or output of the electrical energy of the positive electrode sheet by the positive electrode tab. In the case of lithium-ion batteries, the material for the positive electrode current collector can be aluminum, and the positive active material can be lithium cobalt oxide, lithium iron phosphate, lithium manganese oxide, or lithium nickel cobalt manganese oxide, and so on. The negative electrode sheet comprises a negative electrode current collector and a negative electrode active material layer. The negative electrode active material layer is coated on a surface of the negative electrode current collector. The portion of the negative electrode current collector not coated with the negative electrode active material layer serves as the negative electrode tab to realize the input or output of the electrical energy of the negative electrode sheet by the negative electrode tab. The material of the negative electrode current collector can be copper, and the negative active material can be carbon or silicon, and so on. To ensure that there is no fuse blow during high current flow, the number of positive electrode tabs is plurality and stacked together, and the number of negative electrode tabs is plurality and stacked together.

The material of the separator can be PP (polypropylene), PE (polyethylene), and so on. Furthermore, the electrode assembly can be a wound structure or a stacked structure. The embodiments of the present disclosure are not limited herein.

Batteries have prominent advantages such as high energy density, low environmental pollution, high power density, long service life, broad applicability, and low self-discharge coefficient. They are an important component of the current development of new energy sources. The battery cell of the battery is assembled from the positive electrode sheet, the negative electrode sheet, and the separator through methods such as winding or stacking to form an electrode assembly (bare core). It is then placed into a casing and finally obtained after injecting the electrolyte. However, with the continuous development of battery technology, higher demands have been placed on the safety performance and service life of batteries.

For typical battery cells, when the battery cell of the battery is under conditions such as short-circuits or overcharging, the battery cell is highly susceptible to internal thermal runaway, which leads to a rapid increase in internal pressure, thus causing safety hazards such as fire and explosion. Therefore, the mounting hole is typically provided on the casing, wherein an explosion-proof valve is mounted at the mounting hole. This allows the internal pressure of the battery cell to break through the explosion-proof valve when the thermal runaway of the battery cell occurs, thus releasing the internal pressure of the battery cell so as to reduce the risk of fire and explosion in the battery cell.

The inventors have found that during a thermal runaway in a battery cell, the pressure inside the battery cell impinging on the explosion-proof valve is relatively high. To ensure the stability of the explosion-proof valve and reduce the occurrence of detachment, in the prior art, the explosion-proof valve is typically welded onto the casing in a welded manner so as to increase the stability of the connection between the explosion-proof valve and the casing, thereby reducing the risk of detachment of the explosion-proof valve under the impact of the internal pressure of the battery cell. However, during the mutual welding of the explosion-proof valve and the casing, plastic deformation occurs in the welding region between the explosion-proof valve and the outer shell, thus resulting in larger welding stress between the explosion-proof valve and the casing after the welding process is completed. On the one hand, the explosion-proof valve subjected to welding stress is very easy to shorten the service life of the explosion-proof valve, which is not conducive to improving the service life of the battery cell. On the other hand, it is very easy to cause the welding region between the explosion-proof valve and the casing, due to the pulling caused by the welding stress, to crack due to welding stress. Therefore, a weld failure between the explosion-proof valve and the casing occurs, thus leading to the risk of liquid leakage of the battery cell. This is not conducive to improving the safety of the use of battery cells.

Based on the aforementioned considerations, in order to address the issue of shorter service life and poorer safety in the use of the battery cell, the inventor, after in-depth research, has designed a battery cell. This battery cell comprises a casing and a pressure relief mechanism. The casing is provided therein with an accommodating space configured to accommodate an electrode assembly, wherein the casing is provided with a mounting hole in communication with the accommodating space, and the mounting hole is provided with a first hole wall surface extending along a circumferential direction of the mounting hole. The pressure relief mechanism is arranged in the mounting hole, wherein an outer peripheral surface of the pressure relief mechanism is welded to the first hole wall surface. The casing is provided with a first annular groove, and the first annular groove surrounds an outer side of the first hole wall surface; and/or the pressure relief mechanism is provided with a second annular groove, and the first hole wall surface surrounds an outer side of the second annular groove.

In the structure of the battery cell, the mounting hole configured for mounting the pressure relief mechanism is provided on the casing, and the outer peripheral surface of the pressure relief mechanism is welded to the first hole wall surface of the mounting hole so that the pressure relief mechanism can release the internal pressure of the battery cell. A first annular groove extending along the circumferential direction of the mounting hole is provided on the casing. The first annular groove is provided around the first hole wall surface; and/or a second annular groove extending along the circumferential direction of the mounting hole is provided on the pressure relief mechanism. Additionally, the first hole wall surface is provided around the second annular groove. When the pressure relief mechanism is welded to the first hole wall surface, by the first annular groove and/or the second annular groove, a deformation space can be provided for the plastic deformation generated during welding in the welding region between the two, thereby releasing and absorbing the welding stress between the relief mechanism and the casing. On one hand, it can reduce the impact of welding stress on the pressure relief mechanism, thus improving the service life of the pressure relief mechanism and consequently enhancing the service life of the battery cell. On the other hand, it can reduce the occurrence of cracks in the welding region between the pressure relief mechanism and the casing due to the pulling caused by the welding stress, thereby lowering the risk of liquid leakage from the battery cell due to the failure of the welding between the pressure relief mechanism and the casing. In turn, this will help to improve the safety of the use of the battery cells.

The battery cell disclosed in the embodiments of the present disclosure can be used in various electric devices, including but not limited to vehicles, ships, or aircraft. The power system of the electric device can be formed using the battery cell and battery disclosed in the present disclosure. In this way, it is beneficial to alleviate the welding stress between the pressure relief mechanism and the casing in order to enhance the service life and the safety of the use of the battery cell.

The embodiments of the present disclosure provide an electric device that uses batteries as a power source. The electric device can comprise but is not limited to, mobile phones, tablets, laptops, electric toys, power tools, electric bicycles, electric cars, boats, spacecraft, and more. The electric toys can include stationary or mobile electric toys, for example, video game consoles, electric car toys, electric boat toys, and electric airplane toys. The spacecraft can include aircraft, rockets, space shuttles, and spacecraft, among others.

For ease of explanation, the following embodiment will be described using one embodiment of the present disclosure where the electric device is a vehicle 1000 as an example.

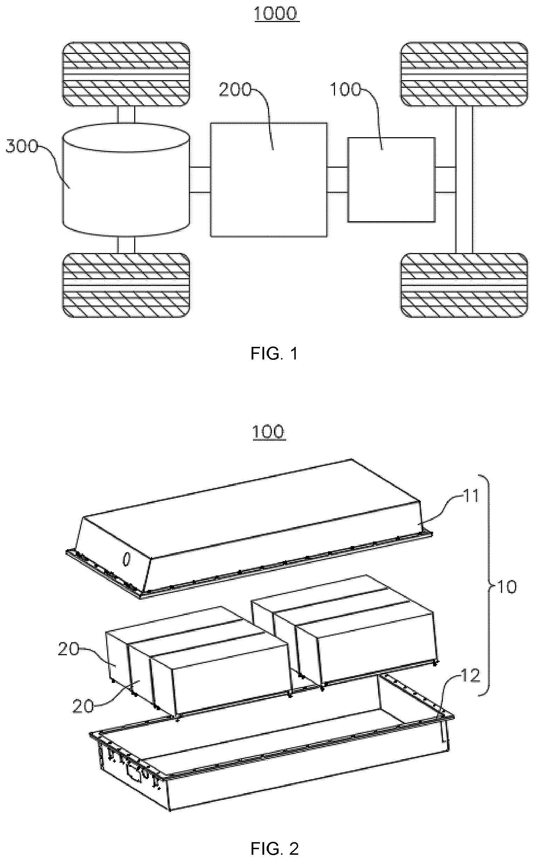

Referring to FIG. 1, FIG. 1 is a schematic diagram of a structure of a vehicle 1000 provided in some embodiments of the present disclosure. The vehicle 1000 can be a gasoline-powered car, a natural gas car, or a new energy vehicle. The new energy vehicles can be pure electric cars, hybrid cars, extended-range cars, etc. A battery 100 is provided inside the vehicle 1000, wherein the battery 100 can be arranged at the bottom, front, or rear of the vehicle 1000. The battery 100 is configured to provide power for the vehicle 1000. For instance, the battery 100 can serve as the operational power source for the vehicle 1000. Additionally, the vehicle 1000 also comprises a controller 200 and a motor 300. The controller 200 is configured to manage the supply of power from the battery 100 to the motor 300, e.g., for working power requirements for starting, navigating, and driving the vehicle 1000.

In some embodiments of the present disclosure, the battery 100 serves not only as the operational power source for the vehicle 1000 but also as the driving power source for the vehicle 1000. It can replace or partially substitute for conventional fuels like gasoline or natural gas to provide driving propulsion for the vehicle 1000.

Referring to FIG. 2, FIG. 2 is an exploded view of the structure of a battery 100 provided in some embodiments of the present disclosure. The battery 100 comprises a box 10 and a battery cell 20, wherein the box 20 is configured to contain the battery cell 10. The box 10 is configured to provide an assembly space for the battery cell 20, and the box 10 can be of various structures. In some embodiments, the box 10 can comprise a first box body 11 and a second box body 12, wherein the first box bod 11 and the second box body 12 are fitted together. The first box body 11 and the second box body 12 collectively define an assembly space configured for accommodating the battery cell 20. The second box body 12 can be of a hollow structure opened at one end, and the first box body 11 can be a plate-like structure. The first box body 11 is capped over an open side of the second box body 12 so that the first box body 11 and the second box body 12 together define an assembly space. Alternatively, both the first box body 11 and the second box body 12 can be of hollow structures opened at one end, and an open side of the first box body 11 is capped over an open side of the second box body 12. Of course, the box 10 formed by the first box body 11 and the second box body 12 can be of a variety of shapes, e.g., cylindrical, rectangular, etc.

In the battery 100, multiple battery cells 20 can be provided. The multiple battery cells 20 can be connected in series, parallel, or hybrid. Hybrid connection refers to having both series and parallel connections among multiple battery cells 20. The multiple battery cells 20 can be directly connected in series, parallel, or a combination thereof, and then the whole comprising the multiple battery cells 20 is housed in the box 10. Of course, the battery 100 can also be in the form that, the multiple battery cells 20 can be first connected in series, parallel, or hybrid to form battery modules, and then the multiple battery modules can be connected in series, parallel, or hybrid to be formed into a whole, which is accommodated within the box 10. The battery 100 can also comprise other structures. For example, the battery 100 can also comprise a busbar component, configured for achieving an electrical connection between the multiple battery cells 20.

Each battery cell 20 can be a secondary battery or a primary battery. It can also be a lithium-sulfur battery, sodium-ion battery, magnesium-ion battery, or other types, but is not limited to these. The battery cell 20 can have various shapes such as cylindrical, flat, rectangular, or other shapes. Exemplarily, in FIG. 2, the battery cell 20 is of a cylindrical structure.

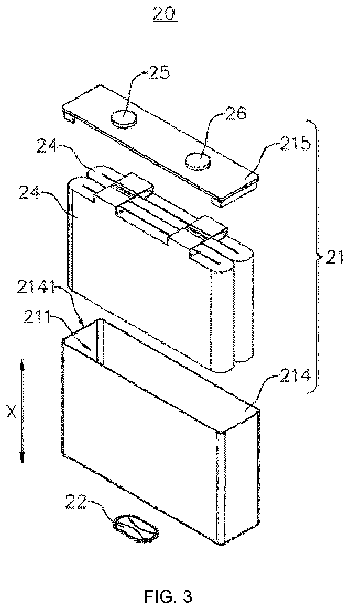

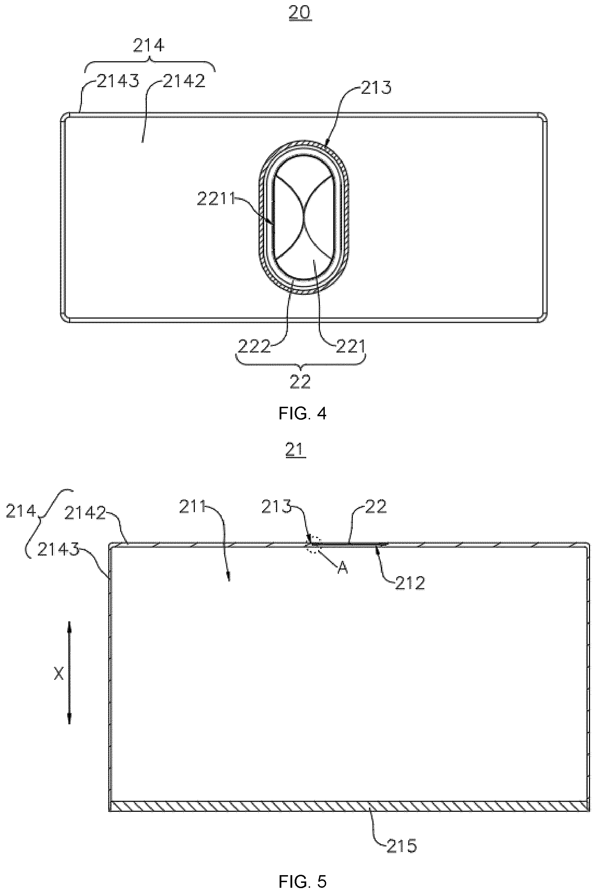

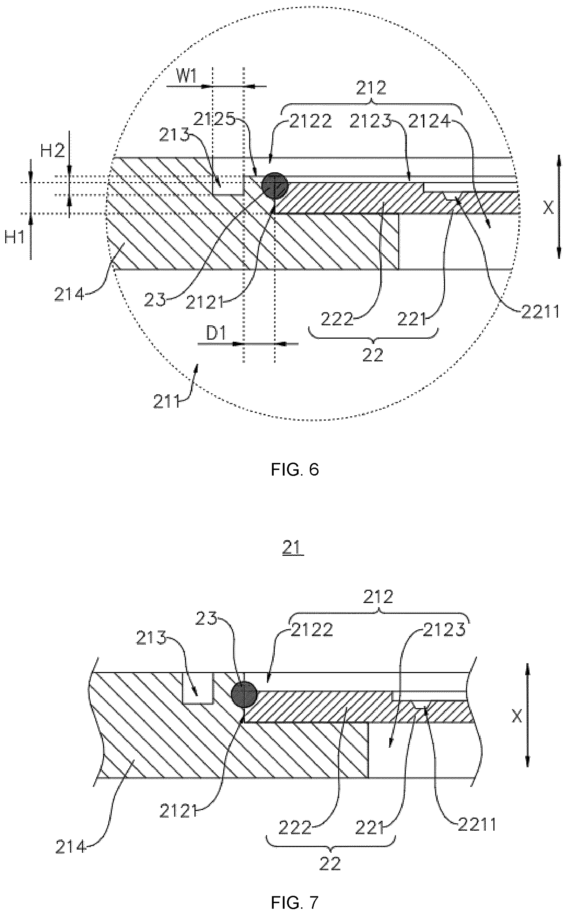

According to some embodiments of the present disclosure, referring to FIGS. 3 to 6, FIG. 3 is an exploded view of the structure of the battery cell 20 provided in some embodiments of the present disclosure; FIG. 4 is an upward view of the battery cell 20 provided in some embodiments of the present disclosure; FIG. 5 is a sectional view of a casing 21 of the battery cell 20 provided in some embodiments of the present disclosure; and FIG. 6 is a partially enlarged view at part A of the casing 21 shown in FIG. 5. The present disclosure provides a battery cell 20, wherein the battery cell 20 comprises a casing 21 and a pressure relief mechanism 22. The casing 21 is provided therein with an accommodating space 211 configured to accommodate an electrode assembly 24, wherein the casing 21 is provided with a mounting hole 212 in communication with the accommodating space 211, and the mounting hole 212 is provided with a first hole wall surface 2121 extending along a circumferential direction of the mounting hole 212. The pressure relief mechanism 22 is arranged in the mounting hole 212, wherein an outer peripheral surface of the pressure relief mechanism 22 is welded to the first hole wall surface 2121. The casing 21 is provided with a first annular groove 213, and the first annular groove 213 surrounds an outer side of the first hole wall surface 2121.

The casing 21 is provided with a mounting hole 212 in communication with the accommodating space 211. In other words, the mounting hole 212 penetrates through the inner surface of the casing 21 to enable the mounting hole 212 to be in communication with the accommodating space 211 of the casing 21.

The mounting hole 212 is provided with a first hole wall surface 2121 extending along the circumferential direction of the mounting hole 212. In other words, the first hole wall surface 2121 is a surface in the hole wall of the mounting hole 212 that extends along the circumferential direction of the mounting hole 212. The mounting hole 212 can be of the structures in a variety of ways. If the mounting hole 212 is the through-hole with constant hole diameter, the first hole wall surface 2121 is a hole wall of the mounting hole 212. If the mounting hole 212 is the stepped hole, the first hole wall surface 2121 is a hole wall of one of the multiple hole segments of the mounting hole 212.

The outer peripheral surface of the pressure relief mechanism 22 is welded to the first hole wall surface 2121, that is, the pressure relief mechanism 22 is provided with an outer peripheral surface extending along the circumferential direction of the mounting hole 212, and the outer peripheral surface of pressure relief mechanism 22 is welded to the first hole wall surface 2121 of the mounting hole 212. This enables the portion of the outer peripheral surface of the pressure relief mechanism 22 and the portion of the first hole wall surface 2121 of the mounting hole 212 to be fused to one another. The outer peripheral surface of the pressure relief mechanism 22 and the first hole wall surface 2121 of the mounting hole 212 can be welded to each other in a variety of ways, such as, for example, fusion welding, pressure welding, brazing, or laser welding. In FIG. 4, the outer peripheral surface of pressure relief mechanism 22 is welded to the first hole wall surface 2121 of the mounting hole 212 to form a weld mark portion 23. That is, the portion of the outer peripheral surface of the pressure relief mechanism 22 and the portion of the first hole wall surface 2121 of the mounting hole 212, which are fused to each other, is a weld mark portion 23.

Optionally, the mounting hole 212 can be of various shapes, and the shape of the mounting hole 212 can be based on the shape of the pressure relief mechanism 22. The shape of the pressure relief mechanism 22 can be circular, oval, rectangular, and the like. Correspondingly, the shape of the mounting hole 212 can be circular, oval, rectangular, and the like. Similarly, the first annular groove 213 can have a variety of shapes, such as, for example, circular, elliptical, or rectangular ring, and the like. Exemplarily, in FIG. 4, the pressure relief mechanism 22 is oval in shape, and correspondingly, the first annular groove 213 is elliptically annular in shape. It is noted that the circumferential direction of the mounting hole 212 is a direction extending along a shaped trajectory of the mounting hole 212. If the shape of the mounting hole 212 is circular, the circumferential direction of the mounting hole 212 is the direction of the circular trajectory; if the shape of the mounting hole 212 is oval, the circumferential direction of the mounting hole 212 is the direction of the oval trajectory.

Of course, in some embodiments, the welding trajectory between the outer peripheral surface of the pressure relief mechanism 22 and the first hole wall surface 2121 of the mounting hole 212 can be a continuous and closed trajectory along the circumferential direction of the mounting hole 212, or can be an interrupted trajectory along the circumferential direction of the mounting hole 212. That is, the welding trajectory between the outer peripheral surface of the pressure relief mechanism 22 and the first bore wall surface 2121 of the mounting hole 212 is discontinuous along the circumferential direction of the mounting hole 212. That is, the weld mark portion 23, formed by welding the outer peripheral surface of the pressure relief mechanism 22 to the first hole wall surface 2121 of the mounting hole 212 to each other, can be a structure that is continuous along the circumferential direction of the mounting hole 212 or can be a structure that is intermittently discontinuous along the circumferential direction of the mounting hole 212. Correspondingly, the first annular groove 213 can also be a continuous and closed structure extending along the circumferential direction of the mounting hole 212, or a structure with multiple groove segments arranged at intervals along the circumferential direction of the mounting hole 212.

Referring to FIG. 3, the battery cell 20 can also include an electrode assembly 24, and the accommodating space 211 of the casing 21 is configured to accommodate the electrode assembly 24. Optionally, the casing 21 can also be configured to accommodate an electrolyte, such as an electrolytic solution. The casing 21 can be of a variety of structural forms. The material of the casing 21 can also be diverse, including copper, iron, aluminum, steel, aluminum alloy, and more.

In FIG. 3, the casing 21 can include a shell 214 and an end cap 215. The shell 214 is provided with an accommodating space 211 configured for accommodating the electrode assembly 24. An opening 2141 is formed at one end of the shell 214, wherein the opening 2141 is in communication with the accommodating space 211. That is, the shell 214 is a hollow structure opened at one end. The end cap 215 is capped over the opening 2141 of the shell 214 to form a hermetical connection, thus forming a sealed space configured for accommodating the electrode assembly 24 and the electrolyte.

During the assembly of the battery cell 20, the electrode assembly 24 can first be placed inside the shell 214; and the shell 214 is filled with the electrolyte. Then, the end cap 215 is capped over the opening 2141 of the shell 214 to form a hermetical connection, thus creating a sealed space configured for accommodating the electrode assembly 24 and the electrolyte. Exemplarily, the end cap 215 is welded to the shell 214.

The shell 214 can be in various shapes, such as cylinder, cuboid, and so on. The shape of the shell 214 can be determined based on the specific shape of the electrode assembly 24. For example, if the electrode assembly 24 is a cylindrical structure, the shell 214 of a cylindrical structure can be selected; if the electrode assembly 24 is a rectangular structure, the shell 214 of a rectangular structure can be selected. Exemplarily, in FIG. 3, the electrode assembly 24 is a rectangular structure, and the shell 214 is a rectangular structure. Of course, the end cap 215 can also be of various structures. For example, the end cap 215 is of a plate-like structure or a hollow structure opened at one end, or the like. Exemplarily, in FIG. 3, the shell 214 is a rectangular structure, the end cap 215 is a plate-like structure, and the end cap 215 is capped over the opening 2141 of the shell 214.

Optionally, the mounting hole 212 can be provided on the shell 214 or on the end cap 215. That is, the pressure relief mechanism 22 can be mounted on the shell 214 or on the end cap 215. If the pressure relief mechanism 22 is mounted on the shell 214, the first annular groove 213 is provided on the shell 214; if the pressure relief mechanism 22 is mounted on the end cap 215, the second annular groove 223 is provided on the end cap 215. Exemplarily, in FIGS. 4 and 5, the shell 214 is provided with a bottom wall 2142 and a side wall 2143. The side wall 2143 is arranged around the bottom wall 2142; along a thickness direction X of the pressure relief mechanism, one end of the side wall 2143 is connected to the bottom wall 2142, and the other end of the side wall 2143 is enclosed to form the opening 2141. The mounting hole 212 is arranged on the bottom wall 2142 of the shell 214, that is, the pressure relief mechanism 22 is mounted on the bottom wall 2142 of the shell 214. Correspondingly, the first annular groove 213 is provided on the bottom wall 2142. Of course, in some embodiments, the mounting hole 212 can also be provided on the side wall 2143 of the shell 214 or on the end cap 215.

The pressure relief mechanism 22 is configured to release the internal pressure of the battery cell 20 when the internal pressure or the temperature of the battery cell 20 reaches a predetermined value. Exemplarily, the pressure relief mechanism 22 can be of various components such as explosion-proof valves, burst discs, gas valves, relief valves, or safety valves, among others.

In some embodiments of the present disclosure, with reference to FIG. 3, the battery cell 20 can also include a positive electrode terminal 25 and a negative electrode terminal 26. Both the positive electrode terminal 25 and the negative electrode terminal 26 are mounted on the end cap 215. Both the positive electrode terminal 25 and the negative electrode terminal 26 are configured to electrically connect with the electrode assembly 24 to serve as a positive output pole and a negative output pole of the battery cell 20. Of course, in other embodiments, the positive electrode terminal 25 and the negative electrode terminal 26 can also both be mounted on the shell 214, or they can be mounted on the shell 214 and the end cap 215, respectively.

Understandably, the casing 21 is not limited to the above structure. The casing 21 can also be other structures. For example, the casing 21 comprises a shell 214 and two end caps 215. The shell 214 is a hollow structure opened at opposite ends. Each end cap 215 is correspondingly capped over one end of the shell 214 to form a hermetically connect, thereby forming a sealed space configured for accommodating the electrode assembly 24 and the electrolyte. In such structure, the positive electrode terminal 25 and the negative electrode terminal 26 can be mounted on the same end cap 215 or on different end caps 215.

It is important to note that the electrode assembly 24 is the component within the battery cell 20 where electrochemical reactions occur. The electrode assembly 24 can comprise a positive electrode sheet, a negative electrode sheet, and a separator. The electrode assembly 24 can be in the form of a wound structure formed by winding a positive electrode sheet, a separator, and a negative electrode sheet together. It can also be in the form of a stacked structure formed by layering a positive electrode sheet, a separator, and a negative electrode sheet.

Optionally, the electrode assembly 24 accommodated within the accommodating space 211 of the casing 21 can be one or multiple. Exemplarily, in FIG. 3, two electrode assemblies 24 are provided, and the two electrode assemblies 24 are arranged in a stacking manner.

The mounting hole 212 configured for mounting the pressure relief mechanism 22 is provided on the casing 21, and the outer peripheral surface of the pressure relief mechanism 22 is welded to the first hole wall surface 2121 of the mounting hole 212 so that the pressure relief mechanism 22 can release the internal pressure of the battery cell 20. A first annular groove 213 extending along the circumferential direction of the mounting hole 212 is provided in the casing 21, and the first annular groove 213 is provided around the first hole wall surface 2121. When the pressure relief mechanism 22 is welded to the first hole wall surface 2121, by the first annular groove 213, a deformation space can be provided for the plastic deformation generated during welding in the welding region between the two, thereby releasing and absorbing the welding stress between the relief mechanism 22 and the casing 21. On one hand, it can reduce the impact of welding stress on the pressure relief mechanism 22, thus improving the service life of the pressure relief mechanism 22 and consequently enhancing the service life of the battery cell 20. On the other hand, it can reduce the occurrence of cracks in the welding region between the pressure relief mechanism 22 and the casing 21 due to the pulling caused by the welding stress, thereby lowering the risk of liquid leakage from the battery cell 20 due to the failure of the welding between the pressure relief mechanism 22 and the casing 21. In turn, this will help to improve the safety of the use of the battery cells 20.

According to some embodiments of the present disclosure, with reference to FIG. 6, a groove width of the first annular groove 213 is W₁, satisfying 0.2mm≤W₁≤3mm.

The groove width of the first annular groove 213 is W₁, that is, in the radial direction of the mounting hole 212, the maximum width of the first annular groove 213 is W₁. In other words, in a section that passes through the geometrical center of the mounting hole 212 and parallel to the thickness direction X of the pressure relief mechanism, the maximum width of the first annular groove 213 is W₁. It should be noted that the radial direction of the mounting hole 212 is a direction from the edge of the mounting hole 212 pointing toward the geometric center of the mounting hole 212 or a direction from the geometric center of the mounting hole 212 pointing toward the edge of the mounting hole 212.

Exemplarily, the first annular groove 213 can have a groove width of W₁, which can be 0.2 mm, 0.5 mm, 1 mm, 1.5 mm, 2 mm, or 3 mm, and the like.

By setting the groove width of the first annular groove 213 at 0.2mm to 3mm, on the one hand, it is possible to alleviate the phenomenon where the effect of the welding stress released by the first annular groove 213 between the pressure relief mechanism 22 and the casing 21 is poor due to the groove width of the first annular groove 213 being too small. On the other hand, it can alleviate the phenomenon that the structural strength of the casing 21 is insufficient, where the first annular groove 213 occupies excessive space in the casing 21 due to the groove width of the first annular groove 213 being too large. This helps to ensure the structural strength of the shell 21 itself.

According to some embodiments of the present disclosure, with reference to FIG. 4 and FIG. 6, The pressure relief mechanism 22 includes a pressure relief portion 221 and a connecting part 222. The pressure relief portion 221 is configured to release an internal pressure of the battery cell 20; and the connecting part 222 is arranged around the pressure relief portion 221 along a circumferential direction of the mounting hole 212, wherein an outer peripheral surface of the connecting part 222 is welded to the first hole wall surface 2121. Along a thickness direction X of the pressure relief mechanism, a thickness of the connecting part 222 is greater than a thickness of the pressure relief portion 221.

Moreover, the pressure relief portion 221 serves to relieve the internal pressure of the battery cell 20 when the battery cell 20 experiences thermal runaway. Exemplarily, in FIGS. 4 and 6, the pressure relief portion 221 is provided with a scored groove 2211, which enables the pressure relief portion 221 to form a relatively weak region at the locations where the scored groove 2211 is arranged. Thus, the pressure relief portion 221 is configured to crack along the scored groove 2211 when the internal pressure or temperature of the battery cell 20 reaches a threshold, thereby releasing the internal pressure of the battery cell 20.

The thickness of the connecting part 222 is greater than the thickness of the pressure relief portion 221, that is, in the thickness direction X of the pressure relief mechanism, the minimum thickness of the connecting part 222 is greater than the maximum thickness of the pressure relief portion 221.

The pressure relief mechanism 22 consists of a pressure relief portion 221 configured for releasing the internal pressure of the battery cell 20 and a connecting part 222 arranged around the pressure relief portion 221. The connecting part 222 is configured for welding with the casing 21. By setting the thickness of the connecting part 222 to be greater than the thickness of the pressure relief portion 221, the welding strength and the welding quality between the connecting part 222 and the casing 21 can be ensured. Additionally, it can reduce the impact on the pressure relief portion 221 when the connecting part 222 is welded to the casing 21. This is conducive to ensuring the stability and reliability in the use of the pressure relief mechanism 22.

In some embodiments of the present disclosure, with reference to FIG. 6, along the thickness direction X of the pressure relief mechanism, the thickness of the connecting part 222 is H₁ and a groove depth of the first annular groove 213 is H₂, satisfying 1.5≤H₁/H₂≤5.

Along the thickness direction X of the pressure relief mechanism, the groove depth of the first annular groove 213 is Hz, that is, the distance between the bottom surface of the first annular groove 213 and the face of the shell 214 arranged with the first annular groove 213 in the thickness direction X of the pressure relief mechanism is H₂.

Exemplarily, the ratio of the thickness of the connecting part 222 to the groove depth of the first annular groove 213 can be 1.5, 2, 2.5, 3, 4, or 5, and the like.

The ratio of the thickness of the connecting part 222 to the groove depth of the first annular groove 213 is set between 1.5 and 5. In other words, the thickness of the connecting part 222 is between 1.5 times and 5 times the groove depth of the first annular groove 213. On one hand, it can alleviate the phenomenon where the effect of the welding stress released by the first annular groove 213 between the pressure relief mechanism 22 and the casing 21 is poor due to the groove depth of the first annular groove 213 being too small. On the other hand, it can alleviate the phenomenon where the structural strength of the casing 21 is insufficient due to the groove depth of the first annular groove 213 being too large, thus reducing the risk of cracking in the shell 21.

According to some embodiments of the present disclosure, referring to FIG. 6, along a radial direction of the mounting hole 212, a distance between the first annular groove 213 and the first hole wall surface 2121 is D₁, satisfying 0.5mm≤D₁≤3mm.

Along the radial direction of the mounting hole 212, the distance between the first annular groove 213 and the first hole wall surface 2121 is D₁, that is, in the radial direction of the mounting hole 212, the distance between the first hole wall surface 2121 and the groove side surface of the first annular groove 213 close to the first hole wall surface 2121 is D₁. In other words, the distance between the inner edge, in the radial direction of the mounting hole 212, of the first annular groove 213 and the first hole wall surface 2121 is D₁ so that there is a gap between the first hole wall surface 2121 and the first annular groove 213, and the width of the gap is D₁.

Exemplarily, the distance D₁ between the first annular groove 213 and the first hole wall surface 2121 can be 0.5 mm, 0.8 mm, 1 mm, 1.5 mm, 2 mm, or 3 mm, and so on.

A distance between the first annular groove 213 and the first hole wall surface 2121 in the radial direction of the mounting hole 212 is set at 0.5 mm to 3 mm. In other words, the width of the gap between the first hole wall surface 2121 and the first annular groove 213 is from 0.5 mm to 3 mm. On one hand, it can alleviate the phenomenon where the welding quality is poor due to the region of the casing 21 configured for welding with the pressure relief mechanism 22 being too small, which is caused by the gap width between the first hole wall surface 2121 and the first annular groove 213 being too small. On the other hand, it can alleviate the phenomenon where the effect of relieving the welding stress between the pressure relief mechanism 22 and the casing 21 by the first annular groove 213 is poor due to the excessive width of the gap between the first hole wall surface 2121 and the first annular groove 213, which prevents the first annular groove 213 from effectively providing deformation space for the plastic deformation generated by the welding of the casing 22 and the pressure relief mechanism 21.

In some embodiments, referring to FIG. 6, the outer peripheral surface of the pressure relief mechanism 22 is welded to the first hole wall surface 2121 to form a weld mark portion 23 extending along the circumferential direction of the mounting hole 212, and the outer edge of the weld mark portion 23 is provided at intervals from an inner edge of the first annular groove 213.

The outer edge of the weld mark portion 23 is arranged at intervals with the inner edge of the first annular groove 213. In other words, a gap is provided between the weld mark portion 23 and the first annular groove 213 in the direction normal to the outer edge of the weld mark portion 23.

The outer edge of the weld mark portion 23 formed by the welding of the pressure relief mechanism 22 and the casing 21 is arranged at intervals with the inner edge of the first annular groove 213. In other words, a gap is provided between the weld mark portion 23 and the first annular groove 213. Thus, it can alleviate the phenomenon of mutual interference between the weld mark portion 23, formed by the welding of the pressure relief mechanism 22 and the casing 21, and the first annular groove 213, thereby reducing the risk of blowouts when the pressure relief mechanism 22 and the casing 21 are welded with each other. This is conducive to improving the welding quality between the casing 21 and the pressure relief mechanism 22.

According to some embodiments of the present disclosure, with reference to FIG. 4 and FIG. 6, the first annular groove 213 is provided on a side of the casing 21 away from the accommodating space 211.

The first annular groove 213 is provided on the side of the casing 21 away from the accommodating space 211. In other words, a slot of the first annular groove 213 penetrates through the side of the casing 21 away from the accommodating space 211 so that the first annular groove 213 is arranged on the outside of the casing 21. Of course, in other embodiments, the first annular groove 213 can also be provided on the side of the casing 21 facing the accommodating space 211.

The first annular groove 213 is arranged on the side of the casing 21 away from the accommodating space 211. In other words, the first annular groove 213 is arranged on the outer side of the casing 21. This type of structure for the casing 21 is conducive to manufacturing and processing, which helps to reduce the difficulty of machining the first annular groove 213.

In some embodiments of the present disclosure, with reference to FIG. 6, the mounting hole 212 is a stepped hole; along the thickness direction X of the pressure relief mechanism, the mounting hole 212 comprises a first hole segment 2122, a second hole segment 2123, and a third hole segment 2124 arranged in sequence, wherein hole diameters of the first hole segment 2122, the second hole segment 2123, and the third hole segment 2124 gradually decrease; and the first hole segment 2122 is located on one side of the second hole segment 2123 away from the accommodating space 211. At least a portion of the pressure relief mechanism 22 is arranged within the second hole segment 2123 and covers the third hole segment 2124; a hole wall of the first hole segment 2122 is connected to the hole wall of the second hole segment 2123 via a connecting surface 2125; the hole wall of the second hole segment 2123 comprises the first hole wall surface 2121; and the first annular groove 213 is arranged on the connecting surface 2125.

The mounting hole 212 comprises a first hole segment 2122, a second hole segment 2123, and a third hole segment 2124 arranged in sequence. In other words, the mounting hole 212 comprises at least three hole segments, respectively a first hole segment 2122, a second hole segment 2123, and a third hole segment 2124 arranged in sequence.

The hole diameters of the first hole segment 2122, the second hole segment 2123, and the third hole segment 2124 gradually decrease; and the first hole segment 2122 is located on one side of the second hole segment 2123 away from the accommodating space 211. In other words, in the thickness direction X of the pressure relief mechanism, the second hole segment 2123 is closer to the accommodating space 211 of the casing 21 compared to the first hole segment 2122, and the third hole segment 2124 is closer to the accommodating space 211 of the casing 21 compared to the second hole segment 2123. Moreover, the projection of the second hole segment 2123 in the thickness direction X of the pressure relief mechanism is located within the first hole segment 2122, and the projection of the third hole segment 2124 in the thickness direction X of the pressure relief mechanism is located within the second hole segment 2123.

Exemplarily, in FIG. 6, the mounting hole 212 is provided with only three hole segments, respectively a first hole segment 2122, a second hole segment 2123, and a third hole segment 2124. A hole wall of the first hole segment 2122 is connected to an outer surface of the shell 214, and a hole wall of the third hole segment 2124 is connected to an inner surface of the shell 214. In other words, the first hole segment 2122 penetrates through the outer surface of the shell 214 and the third hole segment 2124 penetrates through the inner surface of the shell 214. Of course, in other embodiments, the mounting hole 212 can also be provided with two, four, five, or six hole segments, etc. Similarly, the first hole segment 2122 can be the hole segment of the multiple hole segments that is furthest away from the accommodating space 211 of the casing 21, or it can be a single hole segment located between the multiple hole segments. Correspondingly, the third hole segment 2124 can be the hole segment of the multiple hole segments that is closest to the accommodating space 211 of the casing 21, or it can be a single hole segment located between the multiple hole segments.

At least a portion of the pressure relief mechanism 22 is arranged within the second hole segment 2123 and covers the third hole segment 2124. In other words, the pressure relief mechanism 22 is provided within the second hole segment 2123 and seals the third hole segment 2124. The pressure relief mechanism 22 can be accommodated integrally within the second hole segment 2123, or it can be partially accommodated within the second hole segment 2123. Exemplarily, in FIG. 6, the pressure relief mechanism 22 is accommodated integrally within the second hole segment 2123.

The connecting surface 2125 is a surface that connects the hole wall of the first hole segment 2122 to the hole wall of the second hole segment 2123, which is a step surface connected between the first hole segment 2122, and the second hole segment 2123.

The hole wall of the second hole segment 2123 comprises a first hole wall surface 2121, which means that at least a portion of the hole wall of the second hole segment 2123 is welded to the outer peripheral surface of the pressure relief mechanism 22.

The mounting hole 212 is a structure of the stepped hole, and the mounting hole 212 comprises a first hole segment 2122, a second hole segment 2123, and a third hole segment 2124 arranged in sequence. This means that the mounting hole 212 comprises at least three segments to facilitate the assembly of the pressure relief mechanism 22. By arranging the pressure relief mechanism 22 in the second hole segment 2123, the outer peripheral surface of the pressure relief mechanism 22 is welded to the hole wall of the second hole segment 2123. The first annular groove 213 is arranged on the connecting surface 2125 between the hole wall of the first hole segment 2122 and the hole wall of the second hole segment 2123 so that the first annular groove 213 is adjacent to the hole wall of the second hole segment 2123, that is, the first annular groove 213 is adjacent to the first hole wall surface 2121 configured for mutual welding with the pressure relief mechanism 22. This is conducive to enhancing the effect of the first annular groove 213 in releasing the welding stress between the pressure relief mechanism 22 and the casing 21.

In some embodiments, referring to FIG. 7, FIG. 7 is a partial sectional view of the casing 21 of the battery cell 20 provided in some embodiments of the present disclosure. The mounting hole 212 is the stepped hole; along the thickness direction X of the pressure relief mechanism, the mounting hole 212 comprises a first hole segment 2122 and a second hole segment 2123 arranged in sequence, wherein a hole diameter of the first hole segment 2122 is larger than that of the second hole segment 2123, and the first hole segment 2122 penetrates through an outer surface of the casing 21. At least a portion of the pressure relief mechanism 22 is arranged within the first hole segment 2122 and covers the second hole segment 2123; the hole wall of the first hole segment 2122 comprises the first hole wall surface 2121; and the first annular groove 213 is arranged on the outer surface of the casing 21.

The mounting hole 212 comprises a first hole segment 2122 and a second hole segment 2123 provided in sequence. In other words, the mounting hole 212 comprises at least two hole segments, respectively a first hole segment 2122 and a second hole segment 2123 arranged in sequence.

A hole diameter of the first hole segment 2122 is larger than that of the second hole segment 2123, and the first hole segment 2122 penetrates through an outer surface of the casing 21. In other words, the projection of the second hole segment 2123 in the thickness direction X of the pressure relief mechanism is located within the first hole segment 2122. The first hole segment 2122 is the hole segment of the multiple hole segments of the mounting hole 212 that is furthest away from the accommodating space 211 of the casing 21. In other words, the second hole segment 2123 is closer to the accommodating space 211 of the casing 21 compared to the first hole segment 2122.

Exemplarily, in FIG. 7, the mounting hole 212 is provided with only two hole segments, respectively a first hole segment 2122 and a second hole segment 2123. A hole wall of the first hole segment 2122 is connected to an outer surface of the shell 214, and a hole wall of the second hole segment 2123 is connected to an inner surface of the shell 214. In other words, the first hole segment 2122 penetrates through the outer surface of the shell 214 and the second hole segment 2123 penetrates through the inner surface of the shell 214. Of course, in other embodiments, the mounting hole 212 can also be provided with three, four, five, or six hole segments, etc. Correspondingly, the second hole segment 2123 can be the hole segment of the multiple hole segments that is closest to the accommodating space 211 of the casing 21, or it can be a single hole segment located between the multiple hole segments.

The hole wall of the first hole segment 2122 comprises a first hole wall surface 2121, which means that at least a portion of the hole wall of the first hole segment 2122 is welded to the outer peripheral surface of the pressure relief mechanism 22.

The mounting hole 212 is of a structure of the stepped hole. The mounting hole 212 comprises a first hole segment 2122 and a second hole segment 2123 arranged in sequence, and the first hole segment 2122 penetrates through the outer surface of the casing 21. This means that the mounting hole 212 comprises at least two hole segments, and the first hole segment 2122 is the hole segment furthest away from the accommodating space 211 of the casing 21. By arranging the pressure relief mechanism 22 in the first hole segment 2122, the outer peripheral surface of the pressure relief mechanism 22 is welded to the hole wall of the first hole segment 2122, and the first annular groove 213 is arranged on the outer surface of the casing 21. On the one hand, it is convenient to process the first annular groove 213, which is conducive to reducing the difficulty of processing the first annular groove 213. On the other hand, the first annular groove 213 is adjacent to the hole wall of the first hole segment 2122, that is, the first annular groove 213 is adjacent to the first hole wall surface 2121 configured for mutual welding with the pressure relief mechanism 22. This is conducive to enhancing the effect of the first annular groove 213 in releasing the welding stress between the pressure relief mechanism 22 and the casing 21.

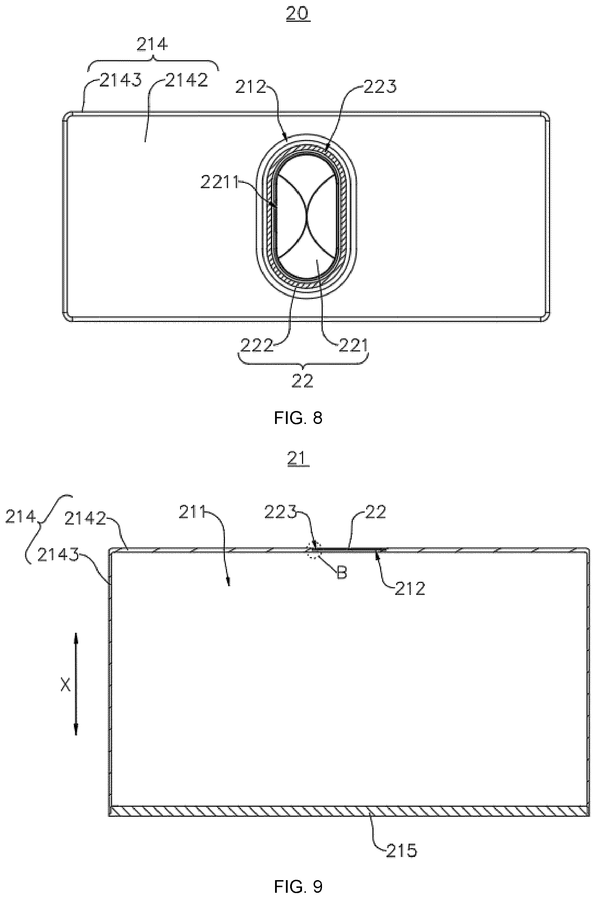

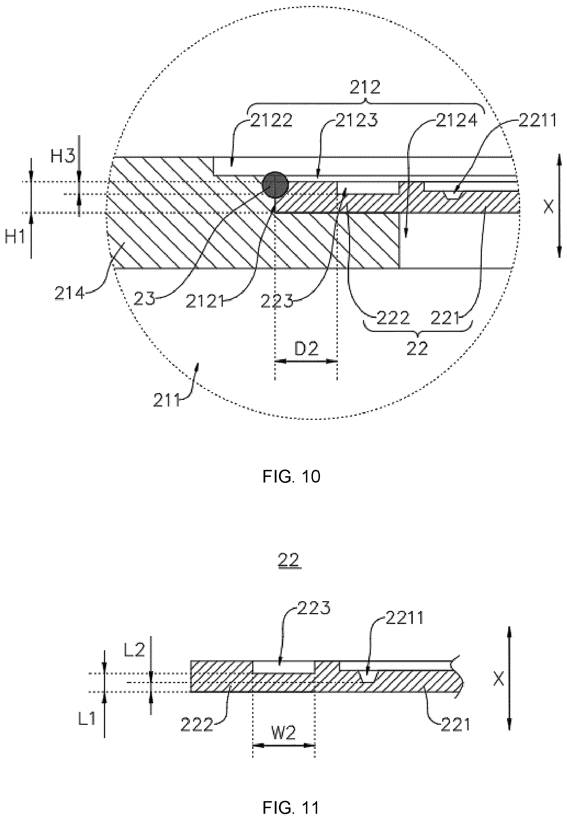

According to some embodiments of the present disclosure, referring to FIGS. 8, 9, and 10, FIG. 8 is an upward view of the battery cell 20 provided in some embodiments of the present disclosure; FIG. 9 is a sectional view of a casing 21 of the battery cell 20 provided in some embodiments of the present disclosure; and FIG. 10 is a partially enlarged view at part B of the casing 21 shown in FIG. 9. The pressure relief mechanism 22 can be provided with a second annular groove 223, and the first hole wall surface 2121 surrounds an outer side of the second annular groove 223.

Optionally, the mounting hole 212 is a stepped hole. Exemplarily, in FIG.10, along the thickness direction X of the pressure relief mechanism, the mounting hole 212 comprises a first hole segment 2122, a second hole segment 2123, and a third hole segment 2124 provided in sequence, wherein hole diameters of the first hole segment 2122, the second hole segment 2123, and the third hole segment 2124 gradually decrease. Moreover, the first hole segment 2122 penetrates through the outer surface of the shell 214. Of course, in other embodiments, the mounting hole 212 can also be provided with two, four, five, or six hole segments.

The pressure relief mechanism 22 is arranged within the second hole segment 2123 and covers the third hole segment 2124. An outer peripheral surface of the pressure relief mechanism 22 is welded to the hole wall of the second hole segment 2123. In other words, the hole wall of the second hole segment 2123 comprises the first hole wall surface 2121.

Exemplarily, in FIG. 8, the pressure relief mechanism 22 is oval in shape, and correspondingly, the second annular groove 223 is elliptically annular in shape. Of course, in other embodiments, the second annular groove 223 can also be in the shape of a circle or a rectangular ring, etc.

Optionally, the welding trajectory between the outer peripheral surface of the pressure relief mechanism 22 and the first hole wall surface 2121 of the mounting hole 212 can be a continuous and closed trajectory along the circumferential direction of the mounting hole 212, or can be an interrupted trajectory along the circumferential direction of the mounting hole 212. That is, the welding trajectory between the outer peripheral surface of the pressure relief mechanism 22 and the first bore wall surface 2121 of the mounting hole 212 is discontinuous along the circumferential direction of the mounting hole 212. That is, the weld mark portion 23, formed by welding the outer peripheral surface of the pressure relief mechanism 22 to the first hole wall surface 2121 of the mounting hole 212 to each other, can be a structure that is continuous along the circumferential direction of the mounting hole 212 or can be a structure that is intermittently discontinuous along the circumferential direction of the mounting hole 212. Correspondingly, the second annular groove 223 can also be a continuous and closed structure extending along the circumferential direction of the mounting hole 212, or a structure with multiple groove segments arranged at intervals along the circumferential direction of the mounting hole 212.

It should be noted that in FIGS. 4 and 6, the battery cell 20 is provided with the first annular groove 213 on the casing 21 only; in FIGS. 8 and 10, the battery cell 20 is provided with the second annular groove 223 on the pressure relief mechanism 22 only. In other embodiments, the battery cell 20 can also be provided with the first annular groove 213 on the casing 21 along with the second annular groove 223 on the pressure relief mechanism 22.

The second annular groove 223 extending along the circumferential direction of the mounting hole 212 is provided on the pressure relief mechanism 22. Additionally, the first hole wall surface 2121 is provided around the second annular groove 223. When the pressure relief mechanism 22 is welded to the first hole wall surface 2121, by the second annular groove 223, a deformation space can be provided for the plastic deformation generated during welding in the welding region between the two, thereby releasing and absorbing the welding stress between the relief mechanism 22 and the casing 21. On one hand, it can reduce the impact of welding stress on the pressure relief mechanism 22, thus improving the service life of the pressure relief mechanism 22 and consequently enhancing the service life of the battery cell 20. On the other hand, it can reduce the occurrence of cracks in the welding region between the pressure relief mechanism 22 and the casing 21 due to the pulling caused by the welding stress, thereby lowering the risk of liquid leakage from the battery cell 20 due to the failure of the welding between the pressure relief mechanism 22 and the casing 21. In turn, this will help to improve the safety of the use of the battery cells 20.

According to some embodiments of the present disclosure, referring to FIG. 11, FIG. 11 is a partial sectional view of a pressure relief mechanism 22 of the battery cell 20 provided in some further embodiments of the present disclosure. A groove width of the second annular groove 223 is W₂, satisfying 0.2mm≤W₂≤3mm.

The groove width of the second annular groove 223 is W₂, that is, in the radial direction of the mounting hole 212, the maximum width of the second annular groove 223 is W₂. In other words, in a section that passes through the geometrical center of the mounting hole 212 and parallel to the thickness direction X of the pressure relief mechanism, the maximum width of the second annular groove 223 is W₂.

Exemplarily, the second annular groove 223 can have a groove width of W₂, which can be 0.2 mm, 0.5 mm, 1 mm, 1.5 mm, 2 mm, or 3 mm, and the like.

By setting the groove width of the second annular groove 223 at 0.2mm to 3mm, on the one hand, it is possible to alleviate the phenomenon where the effect of the welding stress released by the second annular groove 223 between the pressure relief mechanism 22 and the casing 21 is poor due to the groove width of the second annular groove 223 being too small. On the other hand, it can alleviate the phenomenon that the structural strength of the pressure relief mechanism 22 is insufficient, leading to opening the valve prematurely, which is caused by the case where the second annular groove 223 occupies excessive space in the pressure relief mechanism 22 due to the groove width of the second annular groove 223 being too large. This helps to ensure the stability of the pressure relief mechanism 22 in use.

According to some embodiments of the present disclosure, referring to FIG. 10, along the radial direction of the mounting hole 212, a distance between the second annular groove 223 and the first hole wall surface 2121 is D₂, satisfying 0.5mm≤D₂≤3mm.

Along the radial direction of the mounting hole 212, the distance between the second annular groove 223 and the first hole wall surface 2121 is D₂, that is, in the radial direction of the mounting hole 212, the distance between the first hole wall surface 2121 and the groove side surface of the second annular groove 223 close to the first hole wall surface 2121 is D₂. In other words, the distance between the inner edge, in the radial direction of the mounting hole 212, of the second annular groove 223 and the first hole wall surface 2121 is D₂ so that there is a gap between the first hole wall surface 2121 and the second annular groove 223, and the width of the gap is D₂.

Exemplarily, the distance D₂ between the second annular groove 223 and the first hole wall surface 2121 can be 0.5 mm, 0.8 mm, 1 mm, 1.5 mm, 2 mm, or 3 mm, and so on.

A distance between the second annular groove 223 and the first hole wall surface 2121 in the radial direction of the mounting hole 212 is set at 0.5 mm to 3 mm. In other words, the width of the gap between the first hole wall surface 2121 and the second annular groove 223 is from 0.5 mm to 3 mm. On one hand, it can alleviate the phenomenon where the welding quality is poor due to the region of the casing 22 configured for welding with the pressure relief mechanism 21 being too small, which is caused by the gap width between the first hole wall surface 2121 and the second annular groove 223 being too small. On the other hand, it can alleviate the phenomenon where the effect of relieving the welding stress between the pressure relief mechanism 22 and the casing 21 by the second annular groove 223 is poor due to the excessive width of the gap between the first hole wall surface 2121 and the second annular groove 223, which prevents the second annular groove 223 from effectively providing deformation space for the plastic deformation generated by the welding of the casing 22 and the pressure relief mechanism 21.

In some embodiments, referring to FIG. 10, the outer peripheral surface of the pressure relief mechanism 22 is welded to the first hole wall surface 2121 to form a weld mark portion 23 extending along the circumferential direction of the mounting hole 212, and the inner edge of the weld mark portion 23 is provided at intervals from an outer edge of the second annular groove 223.

The outer edge of the weld mark portion 23 is arranged at intervals with the inner edge of the second annular groove 223. In other words, a gap is provided between the weld mark portion 23 and the second annular groove 223 in the direction normal to the outer edge of the weld mark portion 23.

The inner edge of the weld mark portion 23 formed by the welding of the pressure relief mechanism 22 and the casing 21 is arranged at intervals with the outer edge of the second annular groove 223. In other words, a gap is provided between the weld mark portion 23 and the second annular groove 223. Thus, it can alleviate the phenomenon of mutual interference between the weld mark portion 23, formed by the welding of the pressure relief mechanism 22 and the casing 21, and the second annular groove 223, thereby reducing the risk of blowouts when the pressure relief mechanism 22 and the casing 21 are welded with each other. This is conducive to improving the welding quality between the casing 21 and the pressure relief mechanism 22.

According to some embodiments of the present disclosure, referring to FIGS. 8 and 10, the pressure relief mechanism 22 includes a pressure relief portion 221 and a connecting part 222. The pressure relief portion 221 is configured to release an internal pressure of the battery cell 20. The connecting part 222 is arranged around the pressure relief portion 221 along a circumferential direction of the mounting hole 212, wherein an outer peripheral surface of the connecting part 222 is welded to the first hole wall surface 2121. Along a thickness direction X of the pressure relief mechanism, a thickness of the connecting part 222 is greater than a thickness of the pressure relief portion 221. The second annular groove 223 is arranged on the connecting part 222, and the second annular groove 223 surrounds the outer side of the pressure relief portion 221.

The second annular groove 223 surrounds the outer side of the pressure relief portion 221. In other words, the second annular groove 223 extends along the circumferential direction of the mounting hole 212 and is provided on the connecting part 222 of the pressure relief mechanism 22 so that the second annular groove 223 is provided around the pressure relief portion 221.

The pressure relief mechanism 22 is provided with a pressure relief portion 221 and a connecting part 222, wherein the connecting part 222 is configured for welding with the casing 21, and the thickness of the connecting part 222 is greater than the thickness of the pressure relief portion 221. By arranging the second annular groove 223 on the connecting part 222, it is possible to reduce the impact of the second annular groove 223 on the overall structural strength of the pressure relief mechanism 22 and facilitate the machining of the second annular groove 223, thus helping to reduce the manufacturing difficulty of the second annular groove 223.

In some embodiments, referring to FIG. 10, along the thickness direction X of the pressure relief mechanism, the thickness of the connecting part 222 is H₁ and a groove depth of the second annular groove 223 is H₃, satisfying 1.5≤H₁/H₃≤5.

Along the thickness direction X of the pressure relief mechanism, the groove depth of the second annular groove 223 is H₃, that is, the distance between the bottom surface of the second annular groove 223 and the face of the pressure relief portion 221 arranged with the second annular groove 223 in the thickness direction X of the pressure relief mechanism is H₃.

Exemplarily, the ratio of the thickness of the connecting part 222 to the groove depth of the second annular groove 223 can be 1.5, 2, 2.5, 3, 4, or 5, and the like.

The ratio of the thickness of the connecting part 222 to the groove depth of the second annular groove 223 is set between 1.5 and 5. In other words, the thickness of the connecting part 222 is between 1.5 times and 5 times the groove depth of the second annular groove 223. On one hand, it can alleviate the phenomenon where the effect of the welding stress released by the second annular groove 223 between the pressure relief mechanism 22 and the casing 21 is poor due to the groove depth of the second annular groove 223 being too small. On the other hand, it can alleviate the phenomenon where the structural strength of the connecting part 222 of the pressure relief mechanism 22 is insufficient due to the groove depth of the second annular groove 223 being too large, thus ensuring the stability and reliability of the connection between the pressure relief mechanism 22 and the casing 21.

According to some embodiments of the present disclosure, referring to FIGS. 8 10, and 11, the pressure relief portion 221 is provided with a scored groove 2211, and the pressure relief portion 221 is configured to be able to crack along the scored groove 2211 to release the internal pressure of the battery cell 20. Along the thickness direction X of the pressure relief mechanism, a distance between a bottom surface of the second annular groove 223 and a surface of the connecting part 222 away from the second annular groove 223 is L₁, and a distance between a bottom surface of the scored groove 2211 and a surface of the pressure relief portion 221 away from the scored groove 2211 is L₂, satisfying L₁/L₂≤1.2.

The pressure relief portion 221 is provided with a scored groove 2211, which means that the pressure relief portion 221 forms a relatively weak region at the locations where the scored groove 2211 is arranged. Thus, the pressure relief portion 221 can be cracked along the scored groove 2211 when the internal pressure or temperature of the battery cell 20 reaches a threshold, thereby releasing the internal pressure of the battery cell 20.

The distance between the bottom surface of the second annular groove 223 and the surface of the connecting part 222 away from the second annular groove 223 is L₁, that is, in the thickness direction X of the pressure relief mechanism, the thickness of the connecting part 222 at the location where the second annular groove 223 is provided is L₁. In other words, the remaining thickness of the region in which the connecting part 222 is provided with the second annular groove 223 in the thickness direction X of the pressure relief mechanism is L₁.

The distance between the bottom surface of the scored groove 2211 and the surface of the pressure relief portion 221 away from the scored groove 2211 is L₂, that is, in the thickness direction X of the pressure relief mechanism, the thickness of the pressure relief portion 221 at the location where the scored groove 2211 is provided is L₂. In other words, the remaining thickness of the region in which the pressure relief portion 221 is provided with the scored groove 2211 in the thickness direction X of the pressure relief mechanism is L₂.

Exemplarily, in FIG. 10, the scored groove 2211 is provided on a surface of the pressure relief portion 221 away from the accommodating space 211. Of course, in other embodiments, the scored groove 2211 can also be provided on the surface of the pressure relief portion 221 facing the accommodating space 211.

In the thickness direction X of the pressure relief mechanism, the ratio of the distance between the bottom surface of the second annular groove 223 and the surface of the connecting part 222 away from the second annular groove 223 to the distance between the bottom surface of the scored groove 2211 and the surface of the pressure relief portion 221 away from the scored groove 2211 is set to be greater than or equal to 1.2. In other words, the thickness of the connecting part 222 at the position where the second annular groove 223 is arranged is greater than or equal to 1.2 times the thickness of the pressure relief portion 221 at the position where the scored groove 2211 is arranged, which effectively ensures that the pressure relief mechanism 22 primarily opens the valve at the position where the notch groove 2211 is arranged to release the internal pressure of the battery cell 20. Further, this helps to ensure the stability and reliability of the pressure relief mechanism 22 in use, thereby reducing the risk of the pressure relief mechanism 22 being opened at the position where the second annular groove 223 is arranged.

According to some embodiments of the present disclosure, referring to FIGS. 8 10, and 11, the second annular groove 223 is provided on a side of the pressure relief mechanism 22 away from the accommodating space 211.

The second annular groove 223 is provided on the side of the pressure relief mechanism 22 away from the accommodating space 211. That is, the slot of the second annular groove 223 penetrates through the side of the connecting part 222 of the pressure relief mechanism 22 that is away from the accommodating space 211 so that the second annular groove 223 is located outside of the pressure relief mechanism 22. In other words, both the second annular groove 223 and the scored groove 2211 are on the same side as the pressure relief mechanism 22. Of course, in other embodiments, the second annular groove 223 can also be provided on the side of the pressure relief mechanism 22 facing the accommodating space 211.

The second annular groove 223 is arranged on the side of the pressure relief mechanism 22 away from the accommodating space 211. In other words, the second annular groove 223 is arranged on the outer side of the pressure relief mechanism 22. This type of structure for the pressure relief mechanism 22 is conducive to manufacturing and processing, which helps to reduce the difficulty of machining the second annular groove 223.

According to some embodiments of the present disclosure, the present disclosure provides a battery 100, comprising multiple battery cells 20 according to any one of the above embodiments.

Referring to FIG. 2, the battery 100 can further include a box 10, wherein the multiple battery cells 20 are accommodated within the box 10.

According to some embodiments of the present disclosure, the present disclosure further provides an electric device, comprising a battery 100 according to any one of the above solutions, and the battery 100 is configured to provide electrical energy to the electric device.

The electric device can be any of the above-mentioned devices or systems that apply the battery 100.

According to some embodiments of the present disclosure, Referring to FIGS. 3 to 11, the present disclosure provides a battery cell 20, wherein the battery cell 20 comprises a casing 21 and a pressure relief mechanism 22. The casing 21 is provided therein with an accommodating space 211 configured to accommodate an electrode assembly 24, wherein the casing 21 is provided with a mounting hole 212 in communication with the accommodating space 211, and the mounting hole 212 is provided with a first hole wall surface 2121 extending along a circumferential direction of the mounting hole 212. The pressure relief mechanism 22 is arranged in the mounting hole 212, wherein an outer peripheral surface of the pressure relief mechanism 22 is welded to the first hole wall surface 2121 so as to form a weld mark portion 23 extending along the circumferential direction of the mounting hole 212. The casing 21 is provided with a first annular groove 213, and the first annular groove 213 surrounds an outer side of the first hole wall surface 2121; and/or the pressure relief mechanism 22 is provided with a second annular groove 223, and the first hole wall surface 2121 surrounds an outer side of the second annular groove 223. The pressure relief mechanism 22 includes a pressure relief portion 221 and a connecting part 222. The pressure relief portion 221 is configured to release an internal pressure of the battery cell 20; and the connecting part 222 is arranged around the pressure relief portion 221 along a circumferential direction of the mounting hole 212, wherein an outer peripheral surface of the connecting part 222 is welded to the first hole wall surface 2121. Along a thickness direction X of the pressure relief mechanism, a thickness of the connecting part 222 is greater than a thickness of the pressure relief portion 221. The second annular groove 223 is arranged on the connecting part 222, and the second annular groove 223 surrounds the outer side of the pressure relief portion 221. A groove width of the first annular groove 213 is W₁, satisfying 0.2mm≤W₁≤3mm. Along the thickness direction X of the pressure relief mechanism, the thickness of the connecting part 222 is H₁ and a groove depth of the first annular groove 213 is H₂, satisfying 1.5≤H₁/H₂≤5. Along a radial direction of the mounting hole 212, a distance between the first annular groove 213 and the first hole wall surface 2121 is D₁, satisfying 0.5mm≤D₁≤3mm. A groove width of the second annular groove 223 is W₂, satisfying 0.2mm≤W₂≤3mm. Along the radial direction of the mounting hole 212, a distance between the second annular groove 223 and the first hole wall surface 2121 is D₂, satisfying 0.5mm≤D₂≤3mm. Along the thickness direction X of the pressure relief mechanism, a groove depth of the second annular groove 223 is H₃, satisfying 1.5≤H₁/H₃≤5. Additionally, the pressure relief portion 221 is provided with a scored groove 2211, and the pressure relief portion 221 is configured to be able to crack along the scored groove 2211 to release the internal pressure of the battery cell 20. Along the thickness direction X of the pressure relief mechanism, a distance between a bottom surface of the second annular groove 223 and a surface of the connecting part 222 away from the second annular groove 223 is L₁, and a distance between a bottom surface of the scored groove 2211 and a surface of the pressure relief portion 221 away from the scored groove 2211 is L₂, satisfying L₁/L₂≤1.2.

It should be noted that, without conflict, the embodiments and features described in the embodiments of the present disclosure can be combined with each other.

The above are only preferred embodiments of the present disclosure, which is not intended to limit, and the present disclosure can have various changes and variations for those skilled in the art. Any modification, equivalent substitution, improvement, etc. made within the spirit and principles of the present disclosure shall be included in the scope of protection of the present disclosure.

## Claims

1. A battery cell, comprising:
a casing, provided therein with an accommodating space configured to accommodate an electrode assembly, wherein the casing is provided with a mounting hole in communication with the accommodating space, and the mounting hole is provided with a first hole wall surface extending along a circumferential direction of the mounting hole; and
a pressure relief mechanism, arranged in the mounting hole, wherein an outer peripheral surface of the pressure relief mechanism is welded to the first hole wall surface,
wherein the casing is provided with a first annular groove, and the first annular groove surrounds an outer side of the first hole wall surface; and/or
the pressure relief mechanism is provided with a second annular groove, and the first hole wall surface surrounds an outer side of the second annular groove.

2. The battery cell according to claim 1, wherein a groove width of the first annular groove is W₁, satisfying 0.2mm≤W₁≤3mm.

3. The battery cell according to claim 1 or 2, wherein the pressure relief mechanism comprises:
a pressure relief portion, configured to release an internal pressure of the battery cell; and
a connecting part, arranged around the pressure relief portion along the circumferential direction of the mounting hole, wherein an outer peripheral surface of the connecting part is welded to the first hole wall surface; and along a thickness direction of the pressure relief mechanism, a thickness of the connecting part is greater than a thickness of the pressure relief portion.

4. The battery cell according to claim 3, wherein along the thickness direction of the pressure relief mechanism, the thickness of the connecting part is H₁ and a groove depth of the first annular groove is H₂, satisfying 1.5≤H₁/H₂≤5.

5. The battery cell according to any one of claims 1 to 4, wherein along a radial direction of the mounting hole, a distance between the first annular groove and the first hole wall surface is D₁, satisfying 0.5mm≤D₁≤3mm.

6. The battery cell according to any one of claims 1 to 5, wherein the outer peripheral surface of the pressure relief mechanism is welded to the first hole wall surface to form a weld mark portion extending along the circumferential direction of the mounting hole, and an outer edge of the weld mark portion is provided at intervals from an inner edge of the first annular groove.

7. The battery cell according to any one of claims 1 to 6, wherein the first annular groove is provided on a side of the casing away from the accommodating space.

8. The battery cell according to claim 7, wherein the mounting hole is a stepped hole;
along a thickness direction of the pressure relief mechanism, the mounting hole comprises a first hole segment, a second hole segment, and a third hole segment provided in sequence, wherein hole diameters of the first hole segment, the second hole segment and the third hole segment gradually decrease; and the first hole segment is located on one side of the second hole segment away from the accommodating space; and
at least a portion of the pressure relief mechanism is arranged within the second hole segment and covers the third hole segment; a hole wall of the first hole segment is connected to a hole wall of the second hole segment via a connecting surface; the hole wall of the second hole segment comprises the first hole wall surface; and the first annular groove is arranged on the connecting surface.

9. The battery cell according to claim 7, wherein the mounting hole is a stepped hole;
along a thickness direction of the pressure relief mechanism, the mounting hole comprises a first hole segment and a second hole segment provided in sequence, wherein a hole diameter of the first hole segment is larger than that of the second hole segment, and the first hole segment penetrates through an outer surface of the casing; and
at least a portion of the pressure relief mechanism is arranged within the first hole segment and covers the second hole segment; a hole wall of the first hole segment comprises the first hole wall surface; and the first annular groove is arranged on the outer surface of the casing.

10. The battery cell according to any one of claims 1 to 9, wherein a groove width of the second annular groove is W₂, satisfying 0.2mm≤W₂≤3mm.

11. The battery cell according to any one of claims 1 to 10, wherein along a radial direction of the mounting hole, a distance between the second annular groove and the first hole wall surface is D₂, satisfying 0.5mm≤D₂≤3mm.

12. The battery cell according to any one of claims 1 to 11, wherein the outer peripheral surface of the pressure relief mechanism is welded to the first hole wall surface to form a weld mark portion extending along the circumferential direction of the mounting hole, and an inner edge of the weld mark portion is provided at intervals from an outer edge of the second annular groove.

13. The battery cell according to any one of claims 1 to 12, wherein the pressure relief mechanism comprises:
a pressure relief portion, configured to release an internal pressure of the battery cell; and
a connecting part, arranged around the pressure relief portion along the circumferential direction of the mounting hole, wherein an outer peripheral surface of the connecting part is welded to the first hole wall surface, wherein
along a thickness direction of the pressure relief mechanism, a thickness of the connecting part is greater than a thickness of the pressure relief portion; and the second annular groove is arranged on the connecting part, and the second annular groove surrounds an outer side of the pressure relief portion.

14. The battery cell according to claim 13, wherein along the thickness direction of the pressure relief mechanism, the thickness of the connecting part is H₁ and a groove depth of the second annular groove is H₃, satisfying 1.5≤H₁/H₃≤5.

15. The battery cell according to claim 13 or 14, wherein the pressure relief portion is provided with a scored groove, and the pressure relief portion is configured to be able to crack along the scored groove to release the internal pressure of the battery cell; and
along the thickness direction of the pressure relief mechanism, a distance between a bottom surface of the second annular groove and a surface of the connecting part away from the second annular groove is L₁, and a distance between a bottom surface of the scored groove and a surface of the pressure relief portion away from the scored groove is L₂, satisfying L₁/L₂≤1.2.

16. The battery cell according to any one of claims 1 to 15, wherein the second annular groove is provided on one side of the pressure relief mechanism away from the accommodating space.

17. A battery, comprising the battery cell according to any one of claims 1 to 16.

18. An electric device, comprising the battery according to claim 17.
